# EUROPEAN PATENT APPLICATION

(11) **EP 1 614 773 A2**
(43) Date of publication of application: **11.01.2006**
(21) Application number: 05445045.7
(22) Date of filing: 16.06.2005
(51) Int. Cl.: C23C 30/00, C23C 14/08, C23C 16/40

(54) **Insert for metal cutting**

(30) Priority: 09.07.2004 SE 0401819
(71) Applicant: SECO TOOLS AB, S-737 82 Fagersta (SE)
(72) Inventor: Dahlund, Silva, 777 60 Söderbärke (SE); Larsson, Andreas, 737 47 Fagersta (SE)
(74) Representative: Taquist, Henrik Lennart Emanuel

(57) **Abstract**

The present invention relates to a coated cutting insert for metal machining in particular of short chipping materials comprising a tungsten carbide-based substrate with a binder phase enriched surface zone having at least one rake face and at least one clearance face intersecting to form a cutting edge. The binder phase enriched surface zone is at least partly missing on the rake face including at least a part of the surface extending from the cutting edge. As a result an optimum combination of edge strength and wear resistance has been achieved.

## Description

### Background of the Invention

The present invention relates to a coated cemented carbide cutting tool insert particularly useful for rough, medium and finishing machining of steels and cast irons preferably short chipping materials. More particularly, the invention relates to coated inserts in which only part of the substrate is provided with a tough surface region in such a way that improved edge strength is obtained in certain surface regions and increased wear resistance in others in the same insert.

Today, coated cemented carbide inserts with binder phase enriched surface zone as disclosed, e.g. in US 4,227,283, US 4,610,931 and US 4,548,786 are commonly used for turning of metals and alloys. The binder phase enriched surface zone widens the application towards tougher cutting operations but limits the thermal resistance and the wear resistance of the surface zone.

Generally, machining of short chipping materials with coated cemented carbide tools are made with inserts with a flat rake face, without chip breakers, or with simple chipbreakers and which do not have binder phase enriched surface zones.

US 4,610,931 discloses removal of binder phase enriched surface zones on the clearance face probably in order to improve flank wear resistance.

### Summary of the Present Invention

It has surprisingly been found that if the cobalt enriched surface zone on the substrate is missing on areas subjected to high temperature, mechanical load or abrasion i.e. the rake face an increased resistance against plastic deformation and crater wear is achieved without any substantial decrease of edge toughness. The thermal conductivity increases along with the surface hardness and as a result more favourable conditions for heat transfer and abrasion resistance of the surface occurs which decreases the negative effects of high thermal and mechanical loads like plastic deformation, crater wear and abrasive wear.

### Brief Description of the Drawings

Figure 1 shows inserts according to the invention in which
   1) Cutting edge
   2) Cobalt enriched zone
   3) Rake face
   4) Cutting tool
Figures 2-4 summarise the performance of inserts according to the invention under different test conditions.

### Detailed description of the resent invention

According to the present invention a coated cutting tool insert having at least one rake face and at least one clearance face intersecting to form a cutting edge is provided consisting of a cemented carbide body which is provided with an essentially cubic carbide phase free and binder phase enriched surface zone which is at least partly missing on the rake face including at least a part of the surface extending from the cutting edge.

In one embodiment the insert has a flat rake face where said binder phase enriched zone is missing on >25%, preferably >40%, more preferably >60% but present on >25 %, preferably >10 %, most preferably >0 % of the surface of the rake face excluding the surface of the hole for clamping, if any. Preferably, the binder phase enriched surface zone is missing in the corners of the insert, preferably in triangular areas, most preferably isosceles, or along the edges of the cutting tool insert, with an essentially constant width >0.1 mm, preferably >0.25 mm.

In an optional embodiment the binder phase enriched surface zone is completely missing on the rake face.

In an alternative embodiment the rake face is provided with a chip breaker geometry, comprising flat surfaces and depressions, in which the binder phase enrichment is missing on at least parts of the flat surfaces extending from the cutting edge and remains in the depressions. Preferably, the binder phase enriched surface zone is missing along the edges of the cutting tool insert with an essentially constant width >0.1 mm, preferably >0.25 mm.

The binder phase enrichment is at least partly, preferably completely, present on the clearance face.

The insert is preferably negative and the binder phase enriched surface zone is thus missing at least partly on both rake faces.

In a preferred embodiment of the present invention the insert is provided with an essentially cubic carbide phase free and binder phase enriched surface zone with average binder phase content in the range 1.2-2.5 times the nominal binder phase content and a thickness of 5-50 µm.

In a further preferred embodiment, the substrate of the coated cutting tool is a cemented carbide body having a composition of 3.0-9.0 wt.%, preferably 4.0-7.0 wt.% Co, 1.0-10.0 wt.%, preferably 4.0-9.0 wt.% of cubic carbonitride forming elements from groups IVb and Vb of the periodic table, N, C and WC.

The inserts are provided with 5-25 µm thick wear resistant coatings as known in the art, preferably produced by CVD and/or MTCVD techniques, preferably containing a layer of aluminium oxide with a thickness of 1-15 µm.

In a preferred embodiment, the cutting tool insert according to the invention has a coating comprising:
- a layer of TiCₓN_{y}O_{z} with 0.7≤x+y+z≤1, preferably with z<0.2, x>0.3 and y>0.2, most preferably x>0.4, with a thickness of 3-14 µm, preferably 4-12 µm, most preferably 5-10 µm, with columnar grains.
- at least one layer of Al₂O₃, preferably α-Al₂O₃, with a thickness of 2-14 µm, preferably 3-10 µm.
- the outer layer of Al₂O₃ can be followed by further layers of TiCₓN_{y}O_{z}, HfCₓN_{y}O_{z} or ZRCₓN_{y}O_{z} or mixtures thereof with 0.7≤x+y+z≤1.2, preferably with y>x and z<0.4, more preferably y>0.4, most preferably y>0.7, with thickness <3 µm, preferably 0.4-1.5 µm, but the Al₂O₃ layer can also be the outermost layer.

The invention also relates to a method of making said coated cutting tool inserts with selected surface areas without binder phase enrichment. According to the method, the raw materials for the cemented carbide substrate are mixed, compacted and sintered, according to normal procedures resulting a cutting tool insert with an essentially cubic carbide phase free and binder phase enriched surface zone.

After sintering, surface material on the rake face is removed mechanically, chemically or by any other method to at least the depth of the binder phase enriched zone. The binder phase enriched zone on the clearance face is not affected and the toughness around the edge remains. After conventional post sintering treatments including edge honing, a hard wear resistant coating is applied, possibly followed by a post treatment of the coating surface, such as blasting or brushing.

### Examples

Inserts tested in the following examples:
"A" insert according to the invention with a binder phase enriched surface zone present on cutting edge and clearance face but not on the rake face
"B" prior art insert with a binder phase enriched surface zone present on all surfaces delimiting the cutting edge
"C" insert outside the invention with the binder phase enrichment removed on all surfaces.

The tested inserts A, B and C have similar chemical composition of the cemented carbide body and similar physical bulk properties.

### Example 1

Inserts according to the invention, "A", were tested against inserts "B" and "C". The inserts had a bulk composition of 5.3 wt% Co, 3.3 wt% Ta, 2.1 wt% Nb, 2.0 wt% Ti, 6.0 wt% C, 0.2 wt% N and as balance W. The surface zone of the insert substrates consisted of a 25 µm thick binder phase enriched part nearly free of cubic carbonitride phase. After removal of the binder phase enriched zone on the rake face surfaces, the substrates were coated with a 7 µm thick layer of TiCₓNyO_{z}, a 5 µm thick layer of Al₂O₃, consisting of the a-phase and an outer layer of nitrogen rich TiC_{X}NyO_{z} deposited to a thickness of 0.5 µm.

The inserts were tested under the following conditions.

| | |
|---|---|
| Work piece: | Cylindrical Slotted bar |
| Material: | SS1672-08, start diameter 160 mm |
| Insert type: | CNMA120408 |
| Cutting speed | 140 m/min |
| Feed: | increasing from 0,1 to 1,0 mm/rev |
| Depth of cut: | 2.0 mm |
| Length in cut: | 10 mm |
| Remarks: | Interrupted cut without coolant |
| Tool life criteria: | Gradually increased feed until breakage. |

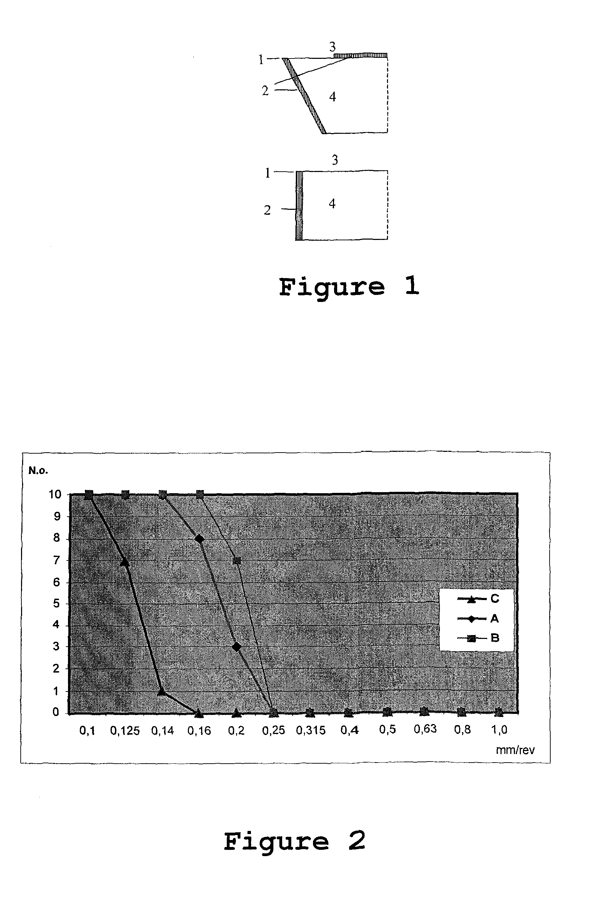

The toughness of the cutting edges is shown in Figure 2 where ten edges of each insert type were run with increasing feed until edge chipping occurred. The inserts "C" without binder phase enriched zones showed severe edge chipping at low feeds while those according to the invention "A" and prior art "B" showed higher and almost equal toughness.

This demonstrates that even though the binder phase enriched surface zone is removed from the rake face the edge toughness remains almost unaffected compared to inserts with the enriched zone remaining.

### Example 2

Inserts according to "A", "B" and "C" were compared in continuous metal cutting at elevated speeds. The insert substrates contained 7.6 wt% Co, 2.2 wt% Ta, 2.0 wt% Nb, 1.5 wt% Ti. The surface zone of the insert substrates consisted of a 30 µm thick binder phase enriched part nearly free of cubic carbonitride phase. After removal of the gradient zone on selected surfaces, the substrates were coated with a 5 µm thick layer was of TiCₓN_{y}O_{z}, a 8 µm thick layer of α-Al₂O₃ and an outer layer of nitrogen rich TiCₓN_{y}O_{z} deposited to a thickness of 0.5 µm.

The test conditions were the following:

| | |
|---|---|
| Work piece: | Cylindrical bar |
| Material: | SS1672-08 |
| Insert type: | TPUN160308 |
| Cutting speed | 300-550 m/min |
| Feed: | 0,3 mm/rev |
| Depth of cut: | 2.5 mm |
| Remarks: | No coolant was used. |

The plastic deformation and/or flank wear (vbn) was measured at the point where the nose radius begins at different cutting speeds (vc).

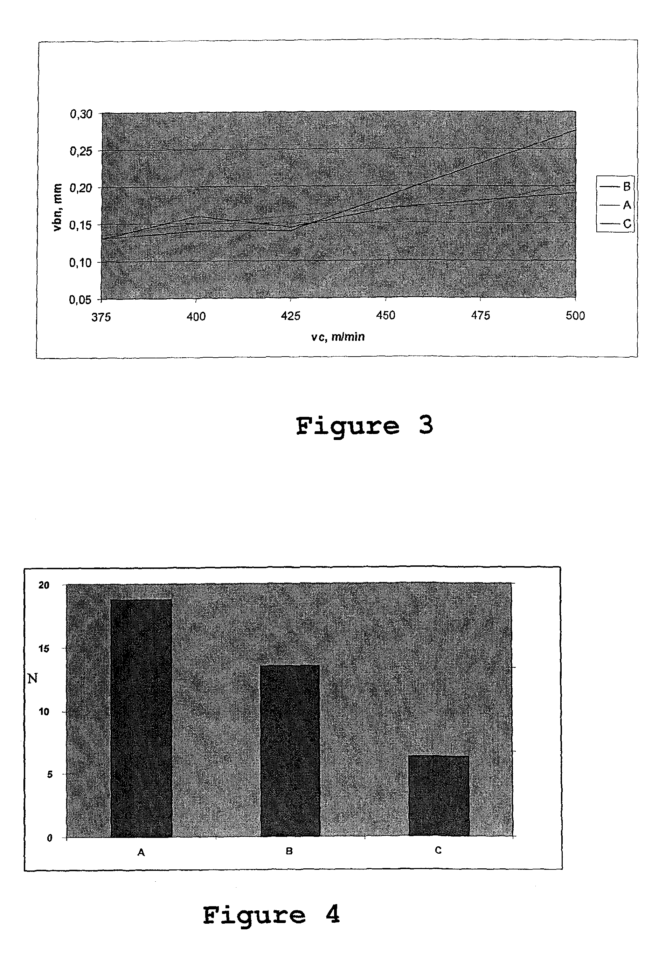

From the results in Figure 3 it is obvious that the inserts according to the invention "A" with binder phase enriched surface zone on the cutting edge and clearance face but not on the rake face and the inserts "C" of prior art with no binder phase enrichment have a better resistance against plastic deformation and flank wear than inserts "B" according to prior art with a binder phase enriched surface zone.

### Example 3

Inserts according to Example 1 were compared and the test conditions were the following:

| | |
|---|---|
| Work piece: | Hexagonal bar |
| Material: | SS2244-05 (hardened) |
| Insert type: | SNMA120412 |
| Cutting speed | 200 m/min |
| Feed: | 0.15-0,3 mm/rev |
| Depth of cut: | 1,5 mm |
| Time in cut: | 37 seconds for each cycle |
| Remarks: | Facing of hexagonal bar with heavy interrupted cuts at the beginning of each cycle, three edges of each insert type were tested. Tool life criteria vb >0,3 mm. |

It is evident from Figure 4, that the prior art inserts "B" and "C" experienced a noticeable shorter tool life (fewer cycles N) than "A" inserts according to the invention. Notch or crater wear was the tool life limiting wear mechanism in this application. Inserts "C", without surface enriched binder phase zone, showed severe notch wear and unpredictable behaviour after just a few cycles. Inserts of type "B", with a surface enriched binder phase zone showed improved tool life with limited notch wear but experienced heavy crater wear leading to edge failure.
For type "A" inserts according to the invention where the binder phase enriched zone on has been removed on the rake face, notch wear was limited and crater wear was not as severe, thus leading to increased tool life.

## Claims

1. A coated cutting insert for metal machining comprising a tungsten carbide-based substrate with a binder phase enriched surface zone having at least one rake face and at least one clearance face intersecting to form a cutting edge **characterized in that** said binder phase enriched surface zone is at least partly missing on the rake face including at least a part of the surface extending from the cutting edge.

2. A coated cutting insert according to claim 1
**characterized in that** said rake face is flat and said binder phase enriched zone is missing on >25%, preferably >40%, but present >10 %, preferably >0 % of the surface of the rake face excluding the surface of the hole for clamping, if any.

3. A coated cutting insert according to claim 1
**characterized in that** said rake face is flat and said binder phase enriched zone is completely missing on the surface of the rake face.

4. A coated cutting insert according to claim 1.
**characterized in that** said rake face is provided with a chip breaker geometry, comprising flat surfaces and depressions, in which the binder phase enrichment is missing on at least parts of the flat surfaces extending from the cutting edge and remains in the depressions.

5. A coated cutting insert according to any of the preceding claims **characterized in that** the binder phase enriched surface zone is missing along the edges of the cutting tool insert with an essentially constant width >0.1 mm, preferably >0.25 mm.

6. A coated cutting insert according to any of the preceding claims **characterized in that** said insert is negative.

7. A coated cutting insert according to any of the preceding claims **characterized in that** the binder phase enriched surface zone has an average binder phase content of 1.2-2.5 times the nominal binder phase content and a thickness of 5-50 µm.

8. A coated cutting insert according to any of the preceding claims **characterized in that** the insert substrate is a cemented carbide having a composition of 3.0-9.0 wt.%, preferably 4.0-7.0 wt.% Co, 1.0-10.0 wt.%, preferably 4.0-9.0 wt.% of cubic carbonitride forming elements from groups IVb and Vb of the periodic table, N, C and WC.

9. A coated cutting insert according to any of the preceding claims**characterized in** being provided with 5-25 µm thick wear resistant coating as known in the art, preferably produced by CVD and/or MTCVD techniques, preferably containing a layer of aluminium oxide with a thickness of 1-15 µm.

10. Method of making a coated cutting insert for metal machining comprising a tungsten carbide-based substrate with a binder phase enriched surface zone having at least one rake face and at least one clearance face intersecting to form a cutting edge by powder metallurgical methods milling, pressing, sintering and post sintering treatment including removal of the binder phase enriched zone **characterized in that** said binder phase enriched surface zone is at least partly missing on the rake face including at least a part of the surface extending from the cutting edge.
